# EUROPEAN PATENT SPECIFICATION

(11) **EP 3 055 747 B1**
(45) Date of publication and mention of the grant of the patent: **25.11.2020**
(21) Application number: 13785986.4
(22) Date of filing: 10.10.2013
(51) Int. Cl.: G05B 23/02, H04L 12/24

(54) **CORRELATION AND ANNOTATION OF TIME SERIES DATA SEQUENCES TO EXTRACTED OR EXISTING DISCRETE DATA**
KORRELATION UND KOMMENTIERUNG ZEITABHÄNGIGER DATENSEQUENZEN FÜR EXTRAHIERTE ODER VORHANDENE DISKRETE DATEN
CORRÉLATION ET ANNOTATION DE SÉQUENCES DE DONNÉES CHRONOLOGIQUES SUR DES DONNÉES DISCRÈTES EXTRAITES OU EXISTANTES

(43) Date of publication of application: 17.08.2016
(73) Proprietor: GE Intelligent Platforms, Inc., Charlottesville, VA 22911 (US)
(72) Inventor: AGGOUR, Kareem Sherif, Niskayuna, NY 12309 (US); BOWMAN, Ward Linnscott, Foxboro, MA 02035 (US); COURTNEY, Brian Scott, Lisle, IL 60532 (US); INTERRANTE, John A., Niskayuna, NY 12309 (US); MATHUR, Sunil, Foxboro, MA 02035 (US); WILLIAMS, Jenny Marie Weisenberg, Niskayuna, NY 12309 (US)
(74) Representative: Aronova
(86) International application number: PCT/US2013/064209
(87) International publication number: WO 2015/053774

(56) References cited:
- EP-A1- 1 538 503
- US-A1- 2008 147 265
- US-A1- 2009 049 338
- US-A1- 2009 100 293
- US-A1- 2009 132 855
- US-B1- 6 643 801

## Description

### I. Field of the Invention

The present disclosure relates generally to a system and method for predicting events. More particularly, the present disclosure relates to a system and method for predicting events by associating time series data with other, non-time series, data.

### II. Background of the Invention

Advances in technology have enabled the development of increasingly complex industrial systems. Further, equipment maintenance within these systems has also evolved over the years from purely corrective maintenance, which reacts to equipment breakdowns, to predictive analysis, which detects early signs of system anomalies. Anomaly detection is an important step in equipment monitoring, fault diagnostics, and system prognostics. All these steps are closely related. Fault diagnostics refer to root cause analysis of a detected fault or an observed change in operational state in a piece of equipment. System prognostics refer to the prediction of impending faults or operational state changes, or the estimation of remaining useful life for a piece of equipment.

Thus, anomaly detection generally involves monitoring changes to the system state to detect equipment malfunction or faulty behavior. Early detection of anomalies allows for timely maintenance actions to be taken before a fault grows in severity, causing secondary damage and equipment downtime. Detecting abnormal conditions is an important first step in both system diagnosis and prognosis, because abnormal behavioral characteristics are often the first sign of a potential future equipment failure. One common approach to anomaly detection is a data-driven approach that utilizes time series data to detect equipment behavior changes tracked in sensor measurements taken during the normal operation of the equipment.

Each of the system components generally are monitored by a plurality of sensors that provide real-time samples of key metrics such as temperature, pressure, and vibration, which individually or in aggregate represent one or more performance characteristics. The performance characteristics may be used to measure the degradation of the components of the system over time. For example, these performance characteristics may include estimates or measurements of physical conditions, operational efficiency, projected remaining operational lifetime, or time to failure of the system or a component thereof.

Through the use of the sensors, the system monitors numerous parameters and collects in real time vast amounts of data for analysis. In addition to time series data, the system monitors the components to collect, for example, discrete alarm data, which can detect the occurrence of a particular event of interest. The events may happen infrequently, may be monitored over a short period of time, or may be monitored on scheduled regular intervals such as daily or weekly.

An event may occur when, e.g., an operating parameter falls outside of a determined threshold, which may trigger an alarm. For example, an alarm event may relate to a process alarm, an equipment alarm, a safety alarm, or a shutdown alarm. The process alarm assists with the detection of changes to the efficiency of a process. An equipment alarm detects problems with equipment. A safety alarm alerts a system operator to a condition that may be potentially dangerous or damaging to the system or its surroundings. Shutdown alarm informs the system operator that an automatic shutdown event has been reached and a shutdown of the equipment or system may have been initiated.

When an event occurs during the operation of the system, the parameters of the time series data related to the event are often analyzed in order to determine a correlation between the event and the time series data to enable the development of prognostics rules for future use. Such an analysis of the time series data for the purpose of anomaly detection is particularly important for understanding the interrelationship between the performance characteristics of the equipment or system during the time series which can be used to predict the occurrence of a future event.

US 6 643 801 B1 discloses a method and system for analyzing fault log data and repair data to estimate the time before a machine-disabling failure occurs. The method includes searching in a database of historical fault log data from a plurality of machines for the occurrence of respective fault patterns indicative of incipient failures of a respective machine subsystem, the fault log data including predetermined data fields, such as customer and machine subsystem identification numbers, the date when the fault occurred, a fault code, a fault code description, etc. The method further includes searching in a database of historical repair data for respective repairs executed on the respective machine subsystem and computing elapsed time between respective occurrences of the fault patterns and the executed repairs.

US 2009/0100293 A1 discloses a method for predicting or detecting an event in turbomachinery comprising: obtaining operational data from at least one machine, said operational data comprising a plurality of performance metrics associated with the operation of said at least one machine, said performance metrics being associated with a plurality of time periods; obtaining peer operational data from at least one peer machine, said peer operational data comprising a plurality of performance metrics associated with the operation of said at least one peer machine; determining if said at least one peer machine has experienced said event or has not experienced said event; and employing a genetic algorithm to analyze said operational data and said peer operational data to determine whether the operational data indicates a past, present or future event.

US 2009/0049338 A1 discloses a root cause diagnostic method and system. The method includes receiving the fault data including a plurality of faults collected over a period of time, and identifying a plurality of episodes within the fault data, where each episode includes a sequence of the faults. The method further includes calculating a frequency of the episodes within the fault data, calculating a correlation confidence of the faults relative to the episodes as a function of the frequency of the episodes, and outputting a report of the faults with the correlation confidence.

US 2009/0132855 A1 discloses a method and system for automatically developing a fault classification system from time series data. The method includes collecting sensor data in a time series format; labeling sensor data in a time series format as either normal, or one of possible faults; segmenting sensor data in a time series format into blocks having a substantially uniform slope with respect to time; labeling the blocks as having a rising, falling, or flat slope; identifying candidate kernels; convoluting the sensor data in a time series format with candidate kernels; applying a feature selection method to determine which kernels have discriminatory power; and training a fault classification system based on kernels having discriminatory power.

EP 1 538 503 A1 discloses a system for detecting predefined events occurring in operating power generation equipment at a customer location and for diagnosing and responding to predefined events based on an analysis of sensed operating data collected from the power generation equipment. Sensor metadata, like timestamps relating to the times that sensor data is collected or identification data of the sensors, is used to determine the rules used to analyze the collected sensor data.

US 2008/0147265 A1 relates to a system for monitoring the condition of a vehicle that includes, inter alia, a diagnostic module that determines actual and/or potential failures of a component or subsystem.

Thus, there is a need for a predictive system that has the capability to identify new patterns within time series data with the further capability to associate the newly identified patterns within the time series data with various other types of data, such as alarm and event data. There is also a need for a system that quantifies the interrelationship between the time series data and the event data to detect or predict future events.

### III. Summary of the Invention

In order to meet at least some of the needs, the present invention provides a method and system for associating time series data to template time series data patterns to detect current or predict future events as claimed in claims 1 and 10, respectively. Especially preferred embodiments of the invention are subject-matter of dependent claims.

In at least one aspect, the present disclosure provides a system for predicting events by associating time series data with other types of data. This system can include a processing unit configured to receive a data stream including time series data transmitted from a sensor configured to measure an operating parameter of a component being monitored. The processing unit analyzes the data stream to identify a sequence of interest in the time series data. The processing unit extracts the identified sequence of interest from the time series data as an extracted event. The processing unit quantifies the relationship between the time series data of the extracted event and the known event by calculating a confidence level to denote a statistical probability of occurrence of the event by comparing data patterns of the extracted event with data of the template pattern of the known event.

### IV. Brief Description of the Drawings

FIG. 1A illustrates an exemplary industrial system for use with the predictive system according to the present disclosure, in this case a gas turbine engine;
FIG. 1B illustrates a schematic diagram of the gas turbine engine of FIG. 1A and depicts an exemplary embodiment of a predictive system including the gas turbine engine;
FIG. 2 illustrates a process flow diagram of a method for predicting events by associating time series data with various types of data in accordance with the present disclosure;
FIG. 3 illustrates a process flow diagram of a method for predicting events by associating time series data with various types of data in accordance with the present disclosure; and
FIG. 4 illustrates an exemplary computing system.

The present disclosure may take form in various components and arrangements of components, and in various process operations and arrangements of process operations. The present disclosure is illustrated in the accompanying drawings, throughout which, like reference numerals may indicate corresponding or similar parts in the various figures. The drawings are only for purposes of illustrating preferred embodiments and are not to be construed as limiting the disclosure. Given the following enabling description of the drawings, the novel aspects of the present disclosure should become evident to a person of ordinary skill in the art.

### V. Detailed Description

The following detailed description is merely exemplary in nature and is not intended to limit the applications and uses disclosed herein. Further, there is no intention to be bound by any theory presented in the preceding background or summary or the following detailed description.

In at least one embodiment, the system and method predicts events by associating time series data with other types of data. The system and method can include a processing unit configured to receive a data stream including time series data transmitted from a sensor configured to measure an operating parameter of a component being monitored. The processing unit analyzes the data stream to identify a sequence of interest in the time series data. The processing unit extracts the identified sequence of interest from the time series data as an extracted event. The processing unit quantifies the relationship between the time series data of the extracted event and the known event by calculating a confidence level to denote a statistical probability of occurrence of the event by comparing data patterns of the extracted event with data of the template pattern of the known event.

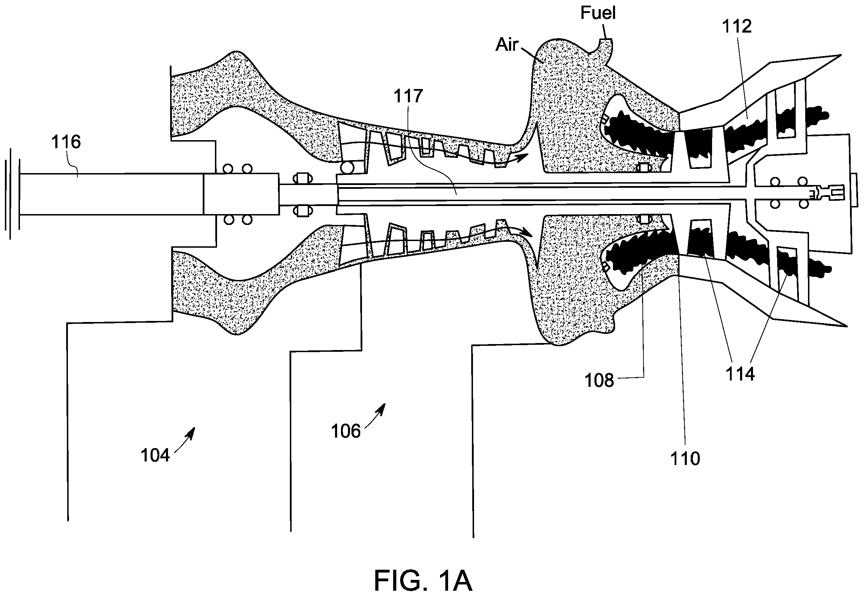

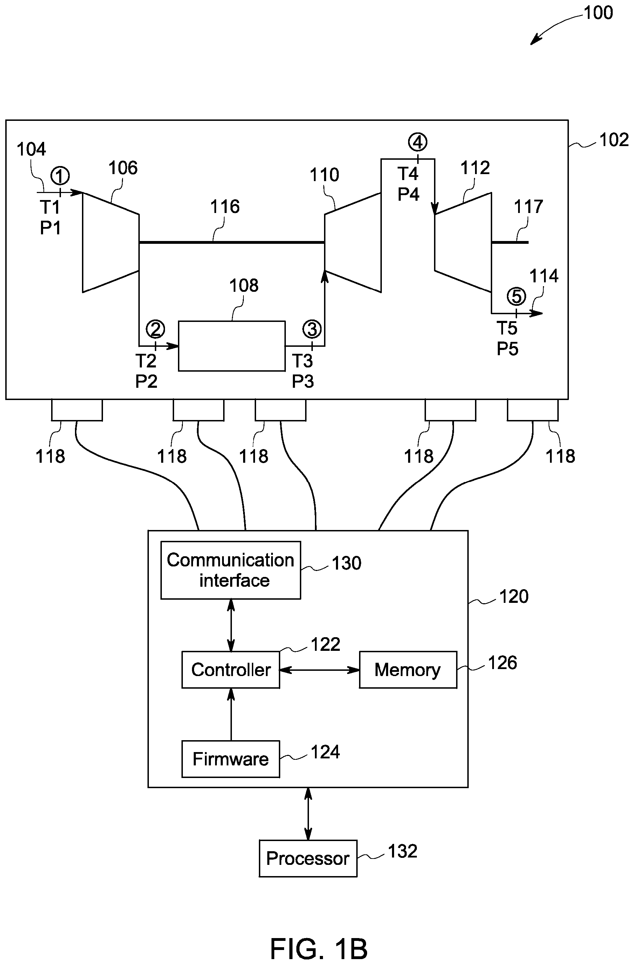

FIGS. 1A-1B illustrate an exemplary embodiment that relates to a system and method for predicting events of a component, by associating time series data with various types of data, for example, event and alarm data and quantifying the inter-relationships between the data to enable real-time assessment of the time series data to detect or predict future events.

In a particular embodiment, and as will be described in greater detail below, the industrial system being monitored by a prediction system is a gas turbine engine. It should be noted that the gas turbine engine component in the prediction system describes an exemplary embodiment. Those skilled in the art will appreciate that the disclosed prediction system is not limited to a gas turbine engine in particular, and may be applied, in general, to a variety of systems or devices, such as, for example, locomotives, aircraft engines, automobiles, turbines, computers, appliances, spectroscopy systems, nuclear accelerators, medical equipment, biological cooling facilities, manufacturing lines, and power transmission systems, to name but a few.

FIGS. 1A-1B illustrate the prediction system 100 for a gas turbine engine 102, which is used to power, for example, a helicopter (not shown). Gas turbine engine 102 comprises an air intake 104, a compressor 106, a combustion chamber 108, a gas generator turbine 110, a power turbine 112, and an exhaust 114.

At the air intake 104, air is suctioned through the inlet section by the compressor 106. Air filtration occurs in the inlet section via particle separation. Air is then compressed by the compressor 106 where the air is used primarily for power production and cooling purposes. Fuel and compressed air is burned in the combustion chamber 108 producing gas pressure, which is directed to the different turbine sections 110, 112.

Gas pressure from the combustion chamber 108 is blown across the gas generator turbine rotors 110 to power the engine and blown across the power turbine rotors 112 to power the helicopter. The two turbines 110, 112 operate on independent output shafts 116, 117. Hot gases exit the engine exhaust 114 to produce a high velocity jet.

One or more sensors 118 are attached at predetermined locations such as 1, 2, 3, 4, and 5 to the gas turbine engine 102. Sensors 118 may be integrated into a housing of the gas turbine 102 or may be removably attached to the housing. Each sensor 118 can generate sensor data that is used by the prediction system 100. In general, a "sensor" is a device that measures a physical quantity and converts it into a signal which can be read by an observer or by an instrument. In general, sensors can be used to sense light, motion, temperature, magnetic fields, gravity, humidity, vibration, pressure, electrical fields, sound, and other physical aspects of an environment.

Non-limiting examples of sensors can include acoustic sensors, vibration sensors, vehicle sensors, chemical sensors/detectors, electric current sensors, electric potential sensors, magnetic sensors, radio frequency sensors, environmental sensors, fluid flow sensors, position, angle, displacement, distance, speed, acceleration sensors, optical, light, imaging sensors, pressure sensors and gauges, strain gauges, torque sensors, force sensors piezoelectric sensors, density sensors, level sensors, thermal, heat, temperature sensors, proximity/presence sensors, etc.

Sensors 118 provide sensor data to a monitoring device 120. The monitoring device 120 measures characteristics of the gas turbine engine 102, and quantifies these characteristics into data that can be analyzed by a processor 132. For example, the monitoring device may measure power, energy, volume per minute, volume, temperature, pressure, flow rate, or other characteristics of the gas turbine engine. The monitoring device may be a suitable monitoring device such as an intelligent electronic device (IED). As used herein, the monitoring device refers to any system element or apparatus with the ability to sample, collect, or measure one or more operational characteristics or parameters of the predictive system.

The monitoring device 120 includes a controller 122, firmware 124, memory 126, and a communication interface 130. The firmware 124 includes machine instructions for directing the controller 122 to carry out operations required for the monitoring device. Memory 126 is used by the controller 122 to store electrical parameter data measured by the monitoring device 120.

Instructions from the processor 132 are received by the monitoring device 120 via the communications interface 130. In various embodiments, the instructions may include, for example, instructions that direct the controller 122 to mark the cycle count, to begin storing electrical parameter data, or to transmit to the processor 132 electrical parameter data stored in the memory 126. The monitoring device 120 is communicatively coupled to the processor 132. One or more sensors 118 may also be communicatively coupled to the processor 132.

The prediction system 100 gathers data from the monitoring device 120 and other sensors 118 for predicting events by associating time series data with various types of data, such as alarm and event data and quantifying the inter-relationships between the data to enable real-time assessment of the time series data to detect or predict future events. The prediction system outputs data and runs a process algorithm according to aspects disclosed herein. The process algorithm includes instructions for associating time series data with other data, such as event and alarm data.

The prediction system 100 provides a process to identify correlations between time series data (e.g., sensor readings) and relational/non-relational data (e.g., alarms and events). In an embodiment, this process may include identifying new patterns across multiple time series variables that lead to an alarm or event. In another embodiment, the process may include detecting the existence of predefined patterns in a time series data stream in order to detect or predict a new event.

At least two principal approaches to associating the time series data with the alarm and event data to predict future events are disclosed herein: a data extraction approach and a data correlation approach. In the data extraction approach, time series data can be analyzed to extract sequences matching known patterns of interest. A weighting value can be assigned to indicate how well the sequence matches the predefined pattern.

For example, a startup sequence may be identified in gas turbine sensor data, utilizing pattern matching against a template pattern. The newly identified startup event can then be stored, along with a value indicating a confidence level that the sequence was correctly identified as a startup event based on how closely the time series data matched the predefined pattern.

A known stored pattern that corresponds to a startup of the gas turbine can be compared to the time series data gathered from different sensors. Based on the analysis, the system can determine, for example, that there is an 80% likelihood of the occurrence of a startup event based on how closely the current time series sensor data matches on the predefined pattern.

In the data correlation approach, sequences of time series data may be correlated to a separately stored, existing event or other discrete data to determine whether any correlation exists between the new time series sequence and stored sequences of known events. The correlation values indicate the strength of the relationship between the time series sequence and the existing stored data. Historical time series data may be mined to identify new patterns that have high correlation to events of interest.

For example, it may be determined that a particular pattern or sequence in gas turbine time series data acts as a leading indicator to a failure event that follows shortly thereafter. The correlation values within the newly defined pattern indicate the likelihood that the sequence will be followed by the failure event. The extracted events and correlation values are then applied to real-time data streams to identify potentially important sequences, in order to detect specific events or even predict future events before they occur.

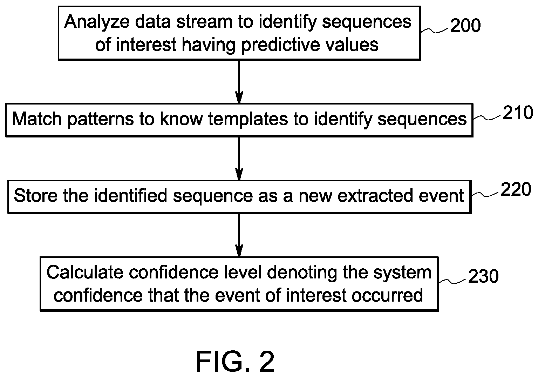

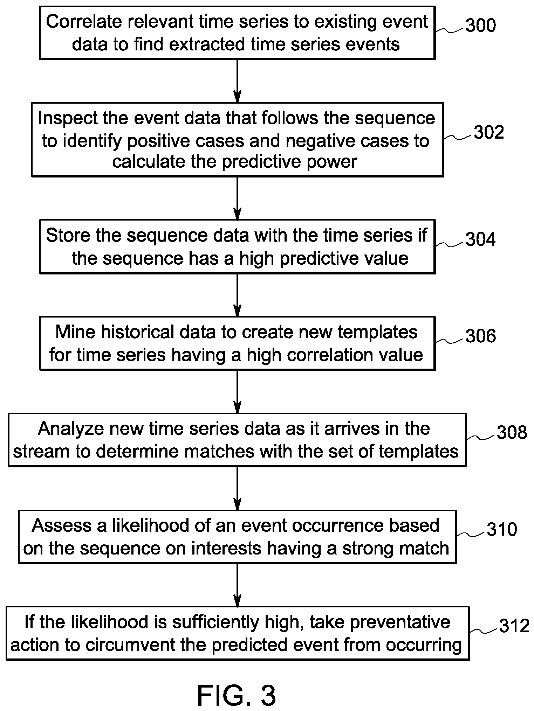

In FIGS. 2 and 3, the prediction system identifies and quantifies relationships between time series and alarm or event data to predict future events. Types of data other than event or alarm data may be used by the prediction system 100 to predict future events. Those skilled in the art would recognize that the prediction system can be used to identify and quantify relationships between time series data and a variety of data types, such as continuous data, discrete data and random data.

In the data extraction approach illustrated in the exemplary embodiment of FIG. 2, a process algorithm receives a stream of data transmitted from the sensors 118 and monitoring device 120. For example, temperature and pressure sensors 118, collectively indicated generally by reference numeral 118, are located on the gas turbine engine 102. Of course, there may be any number of sensors located throughout the gas turbine engine 102 for monitoring any number of conditions.

The various sensors 118 throughout the system may provide operational data regarding the gas turbine engine 102 to the monitoring device 120. Moreover, the controller 122 may also provide data to the monitoring device 120. By way of example, the monitoring device 120 may receive and process data regarding the temperature within the engine, the pressure within the engine, the heat rate, exhaust flow, exhaust temperature, and pressure rate or a host of any other operating conditions regarding the engine 102.

In block 200, the process algorithm analyzes the incoming data stream to identify sequences of interest having predictive value. For example, the process algorithms may perform pattern matching to known template patterns to identify the sequences of interest. In block 210, one or more pattern matching techniques may be employed, potentially including regression, neural networks, decision trees, Bayesian classifiers, Support Vector Machines, clustering, rule induction, nearest neighbor, simple aggregate approximation or cross-correlation. Those skilled in the art would recognize that other pattern matching algorithms may be used, as well.

Once a sequence is identified that matches a template, in block 220, the process algorithm extracts and stores the identified sequence in a device as a newly "extracted" event for further analysis. The extracted event indicates that a certain event has been detected or is predicted to occur. Because the patterns involve multiple metrics across an interval of time, in various embodiments, the sequences of interest can be specified by a beginning time and ending time for the extracted event before storage.

In block 230, the process algorithm calculates a confidence level to denote a probability that the event of interest occurred. The confidence level of the probability of occurrence is based on how closely the sequence matches the known template. To compute the confidence level, the process algorithm compares the event of interest with a template pattern corresponding to a known fault. Upon identifying the sequence of interest, based on the calculated confidence level, the system associates the sequence with the known fault. In various embodiments, the confidence level can be stored along with the extracted event data.

The threshold for the confidence level indicating the probability of occurrence can be established automatically by the system or entered manually into the system by a system operator via a user communication interface. For example, a confidence level of 1.0 may be specified to indicate a perfect match, which denotes perfect confidence that the event represented in the template has occurred. A confidence level less than 1.0 may be specified to indicate a lower confidence that the event has occurred.

For example, by comparing the sequence of interest with the known template, the process algorithm may compute a confidence value of 1.0. This confidence value may be assigned to the sequence of interest and stored to indicate a perfect match.

On the other hand, if the process algorithm computes a confidence values less than 1.0, this value can be assigned to the sequence of interest and stored to denote a weaker match. The system may be programmed to indicate for weak matches a lower confidence level that the event of interest occurred.

Thus, the system is able to set strong strengths for sequences of interest that have very similar patterns to the known templates and set weak strengths for sequences having less similar patterns. The numeric values described herein are just an example and different numeric ranges can be used in actual operations.

In the data correlation approach illustrated in the exemplary embodiment of FIG. 3, after relevant time series sequences are identified, in block 300, the process algorithm may correlate the time series sequences to existing event data stored separately to find extracted time series events. This correlation procedure is particularly useful to reliably predict adverse events, such as failures, before they occur. The relevant time series sequences applied in this approach may be identified using the data extraction approach described above, by using another method, or may be retrieved from a database.

In block 302, the correlation procedure may be performed, for example, by identifying every occurrence of the extracted time series event and then inspecting the event data that chronologically follows that sequence to identify positive cases and negative cases. A set of positive cases indicates that the event to predict is present following the time series sequence. A set of negative cases indicates the event to predict is not present following the sequence. The positive cases may be compiled and used to tune the pattern and calculate the overall accuracy (the predictive power) of the time series sequence.

Multiple approaches such as genetic algorithms or Hidden Markov Models may be used to train the patterns to find the positive cases and ignore the negative cases. For example, the system can be trained based on inputs provided by the system operator or trained with data files produced by a component having a known fault associated therewith.

In block 304, the process algorithm stores the sequence data for sequences having a high predictive value. For example, if the predictive value exceeds a predetermined threshold, the sequence is marked as having a high predictive value and is stored in conjunction with the time series pattern.

In block 306, the process algorithm mines historical data contained in a database to create new template patterns for time series sequences that have a high correlation to important events in the event data. The historical time series data represents signals of actual sensor data collected from a component, such as a gas engine, having known faults.

In block 308, as new time series data arrives in the data stream, it can be analyzed in real time to determine how closely it matches a set of template patterns that are known to have detective or predictive value. Sequences of interest may, for example, have a strong match to a template with moderate predictive value, or a moderate match to a template with a strong predictive value.

For example, information regarding the time series having a high correlation can be stored as an abstract mathematical model of the collected data to create a data mining model of the template patterns having detective or predictive value. After the data mining model is created, new data can be examined with respect to the model to determine if the data fits a desired pattern or rule.

In block 310, these predictive values can then be used to assess the likelihood of the event (e.g., a temperature sensor exceeding a threshold or manufacturing line shutdown).

In block 312, if the likelihood of occurrence is found to be sufficiently high, then action can be taken to prevent the predicted event from occurring. For example in the data correlation approach, the characteristic or parameters of three sensors that behave in a certain manner may have previously been identified as a known pattern to indicate the occurrence of an event. This known time series pattern can then be applied to time series data in real time to predict that a particular event will occur when the sequence of the known pattern is detected.

Based on the prediction, preventative maintenance can be performed to avoid the occurrence of the event. Because a problem or anomaly reported by one component may have repercussions across the entire system, the prediction system 100 can notify the system operator when one component is operating outside its predefined parameters.

Based on the predicted sequences of events, the system and/or the system operator can quickly isolate and troubleshoot the problem. Once a predictive sequence has been detected, the system may automatically perform preventative maintenance by adjusting operational parameters of the system. Alternatively or in conjunction with the system, a system operator may be alerted to take the preventative measures.

The embodiments illustrated and described above disclose a system and method for associating sequences of time series data with both extracted events and existing events, and quantify the relationship between them. These associations enable real-time assessment of time series data to detect or predict future events.

A system and method is provided to annotate a time series data stream with information useful to predict future events in real-time enabling preventative action to be taken to prevent adverse events from occurring. The system and method analyzes time series data to better understand its behavior and identify patterns that can predict the occurrence of an event.

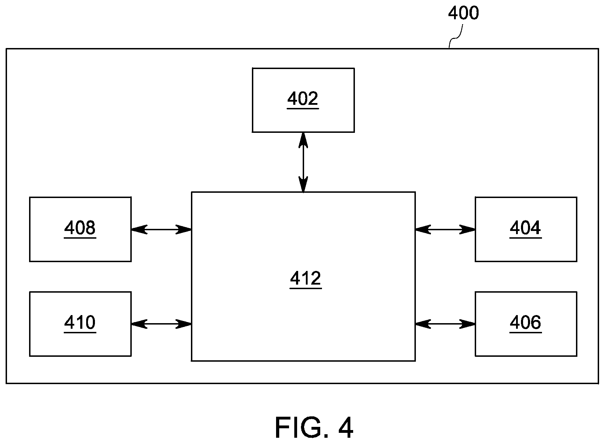

Elements of the prediction system 100 described above may be implemented on any general-purpose computer 400 with sufficient processing power, memory resources, and network throughput capability to handle the necessary workload demand. FIG. 4 illustrates a typical, computer system suitable for implementing one or more embodiments disclosed herein. The general-purpose computer 400 includes a processor 412 (which may be referred to as a central processor unit or CPU) that is in communication with memory devices including secondary storage 402, read-only memory (ROM) 404, random access memory (RAM) 406, input/output (I/O) 408 devices, and network connectivity devices 410. The processor may be implemented as one or more CPU chips.

It is noted that components (simulated or real) associated with the system 100 can include various computer or network components such as servers, clients, controllers, industrial controllers, programmable logic controllers (PLCs), communications modules, mobile computers, wireless components, control components and so forth that are capable of interacting across a network. Similarly, the term controller or PLC as used herein can include functionality that can be shared across multiple components, systems, or networks.

For example, one or more controllers can communicate and cooperate with various network devices across the network. This can include any type of control, communications module, computer, I/O device, sensors, Human Machine Interface (HMI) that communicate via the network, or public networks. The controller can also communicate to and control various other devices such as Input/Output modules including Analog, Digital, Programmed/Intelligent I/O modules, other programmable controllers, communications modules, sensors, output devices, and the like.

The network can include public networks such as the Internet, Intranets, and automation networks such as Control and Information Protocol (CIP) networks including DeviceNet and ControlNet. Other networks include Ethernet, DH/DH+, Remote I/O, Fieldbus, Modbus, Profibus, wireless networks, serial protocols, and so forth.

The secondary storage 402 is typically comprised of one or more disk drives or tape drives and is used for non-volatile storage of data and as an over-flow data storage device if RAM 406 is not large enough to hold all working data. Secondary storage 402 may be used to store programs that are loaded into RAM 406 when such programs are selected for execution.

The ROM 404 is used to store instructions and perhaps data that are read during program execution. ROM 404 is a non-volatile memory device that typically has a small memory capacity relative to the larger memory capacity of secondary storage. The RAM 406 is used to store volatile data and perhaps to store instructions. Access to both ROM 404 and RAM 406 is typically faster than to secondary storage 402.

I/O 408 devices may include printers, video monitors, liquid crystal displays (LCDs), touch screen displays, keyboards, keypads, switches, dials, mice, track balls, voice recognizers, card readers, paper tape readers, or other well-known input devices. The network connectivity devices 410 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards such as code division multiple access (CDMA) and/or global system for mobile communications (GSM) radio transceiver cards, and other well-known network devices. These network connectivity devices 410 may enable the processor 412 to communicate with an Internet or one or more intranets.

With such a network connection, it is contemplated that the processor 412 might receive information from the network, or might output information to the network in the course of performing the above-described method steps. Such information, which is often represented as a sequence of instructions to be executed using processor 412, may be received from and outputted to the network.

The processor 412 executes instructions, codes, computer programs, scripts that it accesses from hard disk, floppy disk, optical disk (these various disk-based systems may all be considered secondary storage 402), ROM 404, RAM 406, or the network connectivity devices 410.

In some embodiments, various functions described above are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory.

Alternative embodiments, examples, and modifications which would still be encompassed by the disclosure may be made by those skilled in the art, particularly in light of the foregoing teachings. Further, it should be understood that the terminology used to describe the disclosure is intended to be in the nature of words of description rather than of limitation.

Those skilled in the art will also appreciate that various adaptations and modifications of the preferred and alternative embodiments described above can be configured without departing from the scope of the disclosure. Therefore, it is to be understood that, within the scope of the appended claims, the disclosure may be practiced other than as specifically described herein.

## Claims

1. A method for associating time series data to template time series data patterns to detect current or predict future events, the method comprising:
receiving at a processor a data stream transmitted from a sensor configured to measure an operating parameter of a component being monitored, wherein the data stream comprises at least time series data;
analyzing (200) the data stream to identify a sequence of interest in the time series data having predictive values by matching patterns (210) in the time series data to a template pattern of a known event;
extracting the identified sequence of interest from the time series data;
marking the identified sequence of interest as an extracted event;
storing (220) the extracted event in a database to indicate a possible detection or prediction of an occurrence of an event;
specifying a relationship between the time series data of the extracted event and the template pattern of the known event in quantifiable terms; and
quantifying the relationship between the time series data of the extracted event and the known event by calculating a confidence level (230) to denote a statistical probability of occurrence of the event by comparing data patterns of the extracted event with data of the template pattern associated with the known event;
wherein the confidence level is a numeric value within a predetermined numeric range of numeric values, wherein one of the numeric values represents a perfect match between the time series data of the extracted event and the template pattern of the known event;
acquiring metadata from content of the time series data of the extracted event, wherein the metadata contains information explaining details of the content of the time series data related to the extracted event; and
storing in the database the metadata associated with the extracted event.

2. The method of claim 1, wherein the occurrence of an event indicates an alarm event.

3. The method of claim 1, wherein the occurrence of an event indicates a failure event.

4. The method of claim 1, wherein the template pattern of the known event represents data associated with an alarm event.

5. The method of claim 1, wherein the template pattern of the known event represents data associated with a failure event.

6. The method of claim 1, further comprising: performing a predictive analysis on the data stream to determine operational problems of the component and to identify the sequence of interest to predict future events associated with the component based on the extracted event data and the metadata stored in the database.

7. The method of claim 1, further comprising a predictive system configured to take preventative actions on the component when the statistical probability of occurrence indicates a failure event has occurred.

8. The method of claim 1, further comprising a predictive system configured to take preventative actions on the component when the statistical probability of occurrence indicates an alarm event has occurred.

9. The method of claim 1, wherein the sequence of interest identifies at least one of a situation that needs preventative actions to avoid an actual failure in the future.

10. A system for associating time series data to template time series data patterns to detect current or predict future events, the system comprising:
at least one processing unit (400) and at least one database;
a plurality of sensors (118) in communication with the at least one processing unit (400);
wherein the at least one processing unit (400) is configured to:
receive at a processor (412) a data stream transmitted from a sensor (118) configured to measure an operating parameter of a component being monitored, wherein the data stream comprises at least time series data;
analyze the data stream to identify a sequence of interest in the time series data having predictive values by matching patterns in the time series data to a template pattern of a known event;
extract the identified sequence of interest from the time series data;
mark the identified sequence of interest as an extracted event;
store the extracted event in a database to indicate a possible detection or prediction of an occurrence of an event;
specify a relationship between the time series data of the extracted event and the template pattern of the known event in quantifiable terms; and
quantify the relationship between the time series data of the extracted event and the known event by calculating a confidence level to denote a statistical probability of occurrence of the event by comparing data patterns of the extracted event with data of the template pattern associated with the known event;
wherein the confidence level is a numeric value within a predetermined numeric range of numeric values, wherein one of the numeric values represents a perfect match between the time series data of the extracted event and the template pattern of the known event;
wherein the processing unit (400) is configured to acquire metadata from content of the time series data of the extracted event, wherein the metadata contains information explaining details of the content of the time series data related to the extracted event; and
store in the database the metadata associated with the extracted event.

11. The system of claim 10, wherein the processing unit is configured to perform a predictive analysis on the data stream to determine operational problems of the component and to identify the sequence of interest to predict future events associated with the component based on the extracted event data and the metadata stored in the database.

## Patentansprüche

1. Verfahren zum Verknüpfen von Zeitreihendaten mit Schablonen von Zeitreihendatenmustern, um aktuelle Ereignisse zu erkennen oder zukünftige Ereignisse vorherzusagen, wobei das Verfahren umfasst:
Empfangen eines Datenstroms an einem Prozessor, der aus einem Sensor übertragen wird, der dazu ausgelegt ist, einen Betriebsparameter einer zu überwachenden Komponente zu messen, wobei der Datenstrom mindestens Zeitreihendaten umfasst;
Analysieren (200) des Datenstroms, um eine Sequenz von Interesse in den Zeitreihendaten mit Vorhersagewerten durch Abgleichen von Mustern (210) in den Zeitreihendaten mit einem Schablonenmuster eines bekannten Ereignisses zu identifizieren;
Extrahieren der identifizierten Sequenz von Interesse aus den Zeitreihendaten;
Markieren der identifizierten Sequenz von Interesse als extrahiertes Ereignis;
Speichern (220) des extrahierten Ereignisses in einer Datenbank, um eine mögliche Erkennung oder Vorhersage des Auftretens eines Ereignisses anzuzeigen;
Spezifizieren einer Beziehung zwischen den Zeitreihendaten des extrahierten Ereignisses und dem Schablonenmuster des bekannten Ereignisses in quantifizierbaren Begriffen; und
Quantifizieren der Beziehung zwischen den Zeitreihendaten des extrahierten Ereignisses und des bekannten Ereignisses durch Berechnen eines Konfidenzniveaus (230), um eine statistische Wahrscheinlichkeit des Auftretens des Ereignisses durch Vergleichen von Datenmustern des extrahierten Ereignisses mit Daten des mit dem bekannten Ereignis verknüpften Schablonenmusters zu benennen;
wobei das Konfidenzniveau ein numerischer Wert innerhalb eines vorbestimmten numerischen Bereichs von numerischen Werten ist, wobei einer der numerischen Werte eine perfekte Übereinstimmung zwischen den Zeitreihendaten des extrahierten Ereignisses und dem Schablonenmuster des bekannten Ereignisses darstellt;
Erfassen von Metadaten aus dem Inhalt der Zeitreihendaten des extrahierten Ereignisses, wobei die Metadaten Informationen enthalten, die Einzelheiten des Inhalts der Zeitreihendaten in Bezug auf das extrahierte Ereignis erklären; und
Speichern der mit dem extrahierten Ereignis verbundenen Metadaten in der Datenbank.

2. Verfahren gemäß Anspruch 1, wobei das Auftreten des Ereignisses ein Alarmereignis anzeigt.

3. Verfahren gemäß Anspruch 1, wobei das Auftreten des Ereignisses ein Ausfallereignis anzeigt.

4. Verfahren gemäß Anspruch 1, wobei das Schablonenmuster des bekannten Ereignisses Daten darstellt, die mit einem Alarmereignis verknüpft sind.

5. Verfahren gemäß Anspruch 1, wobei das Schablonenmuster des bekannten Ereignisses Daten darstellt, die mit einem Ausfallereignis verknüpft sind.

6. Verfahren gemäß Anspruch 1 ferner umfassend: Durchführen einer Vorhersageanalyse des Datenstroms, um Betriebsprobleme der Komponente zu bestimmen und die Sequenz von Interesse zu identifizieren, um zukünftige Ereignisse, die mit der Komponente verknüpft sind, basierend auf den extrahierten Ereignisdaten und den in der Datenbank gespeicherten Metadaten vorherzusagen.

7. Verfahren gemäß Anspruch 1, ferner umfassend ein Vorhersagesystem, das dazu ausgelegt ist, vorbeugende Maßnahmen an der Komponente zu ergreifen, wenn die statistische Wahrscheinlichkeit des Auftretens anzeigt, dass ein Ausfallereignis aufgetreten ist.

8. Verfahren gemäß Anspruch 1, ferner umfassend ein Vorhersagesystem, das dazu ausgelegt ist, vorbeugende Maßnahmen an der Komponente zu ergreifen, wenn die statistische Wahrscheinlichkeit des Auftretens anzeigt, dass ein Alarmereignis aufgetreten ist.

9. Verfahren gemäß Anspruch 1, wobei die Sequenz von Interesse mindestens eine Situation identifiziert, die vorbeugende Maßnahmen erfordert, um einen tatsächlichen Ausfall in der Zukunft zu vermeiden.

10. System zum Verknüpfen von Zeitreihendaten mit Zeitreihendatenmustern, um aktuelle Ereignisse zu erkennen oder zukünftige Ereignisse vorherzusagen, wobei das System umfasst:
mindestens eine Verarbeitungseinheit (400) und mindestens eine Datenbank;
eine Vielzahl von Sensoren (118) in Kommunikation mit der mindestens einen Verarbeitungseinheit (400);
wobei die mindestens eine Datenverarbeitungseinheit (400) dazu eingerichtet ist:
einen Datenstroms an einem Prozessor (412) zu empfangen, der aus einem Sensor (118) übertragen wird, der dazu ausgelegt ist, einen Betriebsparameter einer zu überwachenden Komponente zu messen, wobei der Datenstrom mindestens Zeitreihendaten umfasst;
den Datenstrom zu analysieren, um eine Sequenz von Interesse in den Zeitreihendaten mit Vorhersagewerten durch Abgleichen von Mustern in den Zeitreihendaten mit einem Schablonenmuster eines bekannten Ereignisses zu identifizieren;
die identifizierte Sequenz von Interesse aus den Zeitreihendaten zu extrahieren;
die identifizierte Sequenz von Interesse als extrahiertes Ereignis zu markieren;
das extrahierte Ereignis in einer Datenbank zu speichern, um eine mögliche Erkennung oder Vorhersage des Auftretens eines Ereignisses anzuzeigen;
eine Beziehung zwischen den Zeitreihendaten des extrahierten Ereignisses und dem Schablonenmuster des bekannten Ereignisses in quantifizierbaren Begriffen zu spezifizieren; und
die Beziehung zwischen den Zeitreihendaten des extrahierten Ereignisses und des bekannten Ereignisses durch Berechnen eines Konfidenzniveaus zu quantifizieren, um eine statistische Wahrscheinlichkeit des Auftretens des Ereignisses durch Vergleichen von Datenmustern des extrahierten Ereignisses mit Daten des mit dem bekannten Ereignis verknüpften Schablonenmusters zu benennen;
wobei das Konfidenzniveau ein numerischer Wert innerhalb eines vorbestimmten numerischen Bereichs von numerischen Werten ist, wobei einer der numerischen Werte eine perfekte Übereinstimmung zwischen den Zeitreihendaten des extrahierten Ereignisses und dem Schablonenmuster des bekannten Ereignisses darstellt;
wobei die Verarbeitungseinheit (400) dazu ausgelegt ist, Metadaten aus dem Inhalt der Zeitreihendaten des extrahierten Ereignisses zu erfassen, wobei die Metadaten Informationen enthalten, die Einzelheiten des Inhalts der Zeitreihendaten in Bezug auf das extrahierte Ereignis erklären; und
die mit dem extrahierten Ereignis verknüpften Metadaten in der Datenbank zu speichern.

11. System gemäß Anspruch 10, wobei die Verarbeitungseinheit dazu eingerichtet ist, eine Vorhersageanalyse an dem Datenstroms durchzuführen, um Betriebsprobleme der Komponente zu bestimmen und die Sequenz von Interesse zu identifizieren, um zukünftige mit der Komponente verknüpfte Ereignisse basierend auf den extrahierten Ereignisdaten und den in der Datenbank gespeicherten Metadaten vorherzusagen.

## Revendications

1. Procédé pour associer des données de séries temporelles à des configurations modèles de données de séries temporelles pour détecter des événements actuels ou prédire des événements à venir, le procédé comprenant :
la réception, dans un processeur, d'un flux de données transmis à partir d'un capteur configuré pour mesurer un paramètre de fonctionnement d'un composant en train d'être surveillé, dans lequel le flux de données comprend au moins des données de séries temporelles ;
l'analyse (200) du flux de données pour identifier une séquence d'intérêt dans les données de séries temporelles ayant des valeurs prédictives en assortissant des configurations (210) dans les données de séries temporelles à une configuration modèle d'un événement connu ;
l'extraction de la séquence identifiée d'intérêt à partir des données de séries temporelles ;
le marquage de la séquence identifiée d'intérêt en tant qu'événement extrait ;
le stockage (220) de l'événement extrait dans une base de données pour indiquer une éventuelle détection ou prédiction d'une survenue d'un événement ;
la spécification d'une relation entre les données de séries temporelles de l'événement extrait et la configuration modèle de l'événement connu en termes quantifiables ; et
la quantification de la relation entre les données de séries temporelles de l'événement extrait et l'événement connu en calculant un niveau de confiance (230) pour dénoter une probabilité statistique de survenue de l'événement en comparant des configurations de données de l'événement extrait à des données de la configuration modèle associée à l'événement connu ;
dans lequel le niveau de confiance est une valeur numérique au sein d'une plage numérique prédéterminée de valeurs numériques, dans lequel une des valeurs numériques représente un assortiment parfait entre les données de séries temporelles de l'événement extrait et la configuration modèle de l'événement connu ;
l'acquisition de métadonnées à partir d'un contenu des données de séries temporelles de l'événement extrait, dans lequel les métadonnées contiennent des informations expliquant des détails du contenu des données de séries temporelles connexes à l'événement extrait ; et
le stockage, dans la base de données, des métadonnées associées à l'événement extrait.

2. Procédé selon la revendication 1, dans lequel la survenue d'un événement indique un événement d'alarme.

3. Procédé selon la revendication 1, dans lequel la survenue d'un événement indique un événement de défaillance.

4. Procédé selon la revendication 1, dans lequel la configuration modèle de l'événement connu représente des données associées à un événement d'alarme.

5. Procédé selon la revendication 1, dans lequel la configuration modèle de l'événement connu représente des données associées à un événement de défaillance.

6. Procédé selon la revendication 1, comprenant en outre : la réalisation d'une analyse prédictive sur le flux de données pour déterminer des problèmes de fonctionnement du composant et pour identifier la séquence d'intérêt pour prédire des événements à venir associés au composant sur la base des données d'événement extrait et des métadonnées stockées dans la base de données.

7. Procédé selon la revendication 1, comprenant en outre un système prédictif configuré pour prendre des mesures préventives sur le composant lorsque la probabilité statistique de survenue indique qu'un événement de défaillance est survenu.

8. Procédé selon la revendication 1, comprenant en outre un système prédictif configuré pour prendre des mesures préventives sur le composant lorsque la probabilité statistique de survenue indique qu'un événement d'alarme est survenu.

9. Procédé selon la revendication 1, dans lequel la séquence d'intérêt identifie au moins une d'une situation qui nécessite des mesures préventives pour éviter une défaillance en tant que telle à l'avenir.

10. Système pour associer des données de séries temporelles à des configurations modèles de données de séries temporelles pour détecter des événements actuels ou prédire des événements à venir, le système comprenant :
au moins une unité de traitement (400) et au moins une base de données ;
une pluralité de capteurs (118) en communication avec l'au moins une unité de traitement (400) ;
dans lequel l'au moins une unité de traitement (400) est configurée pour :
recevoir, dans un processeur (412), un flux de données transmis à partir d'un capteur (118) configuré pour mesurer un paramètre de fonctionnement d'un composant en train d'être surveillé, dans lequel le flux de données comprend au moins des données de séries temporelles ;
analyser le flux de données pour identifier une séquence d'intérêt dans les données de séries temporelles ayant des valeurs prédictives en assortissant des configurations dans les données de séries temporelles à une configuration modèle d'un événement connu ;
extraire la séquence identifiée d'intérêt à partir des données de séries temporelles ;
marquer la séquence identifiée d'intérêt en tant qu'événement extrait ;
stocker l'événement extrait dans une base de données pour indiquer une éventuelle détection ou prédiction d'une survenue d'un événement ;
spécifier une relation entre les données de séries temporelles de l'événement extrait et la configuration modèle de l'événement connu en termes quantifiables ; et
quantifier la relation entre les données de séries temporelles de l'événement extrait et l'événement connu en calculant un niveau de confiance pour dénoter une probabilité statistique de survenue de l'événement en comparant des configurations de données de l'événement extrait à des données de la configuration modèle associée à l'événement connu ;
dans lequel le niveau de confiance est une valeur numérique au sein d'une plage numérique prédéterminée de valeurs numériques, dans lequel une des valeurs numériques représente un assortiment parfait entre les données de séries temporelles de l'événement extrait et la configuration modèle de l'événement connu ;
dans lequel l'unité de traitement (400) est configurée pour acquérir des métadonnées à partir d'un contenu des données de séries temporelles de l'événement extrait, dans lequel les métadonnées contiennent des informations expliquant des détails du contenu des données de séries temporelles connexes à l'événement extrait ; et
stocker, dans la base de données, les métadonnées associées à l'événement extrait.

11. Système selon la revendication 10, dans lequel l'unité de traitement est configurée pour réaliser une analyse prédictive sur le flux de données pour déterminer des problèmes de fonctionnement du composant et pour identifier la séquence d'intérêt pour prédire des événements à venir associés au composant sur la base des données d'événement extrait et des métadonnées stockées dans la base de données.
